(19) Europäisches Patentamt
European Patent Office
Office européen des brevets

(11) Veröffentlichungsnummer: **0 413 326 B1**

(12) # EUROPÄISCHE PATENTSCHRIFT

(45) Veröffentlichungstag der Patentschrift: **08.03.95**

(51) Int. Cl.$^{6}$: **C08F 10/00**, C08F 4/642

(21) Anmeldenummer: **90115672.9**

(22) Anmeldetag: **16.08.90**

Die Akte enthält technische Angaben, die nach dem Eingang der Anmeldung eingereicht wurden und die nicht in dieser Patentschrift enthalten sind.

(54) **Verfahren zur Herstellung eines Polyolefins.**

(30) Priorität: **18.08.89 DE 3927257**

(43) Veröffentlichungstag der Anmeldung:
**20.02.91 Patentblatt 91/08**

(45) Bekanntmachung des Hinweises auf die Patenterteilung:
**08.03.95 Patentblatt 95/10**

(84) Benannte Vertragsstaaten:
**BE DE ES FR GB IT NL**

(56) Entgegenhaltungen:
**EP-A- 0 302 424**
**EP-A- 0 318 049**

(73) Patentinhaber: **HOECHST AKTIENGESELLSCHAFT**

**D-65926 Frankfurt (DE)**

(72) Erfinder: **Dolle, Volker, Dr.**
**Hattersheimer Strasse 15**
**D-6233 Kelkheim (Taunus) (DE)**
Erfinder: **Antberg, Martin, Dr.**
**Sachsenring 10**
**D-6238 Hofheim am Taunus (DE)**
Erfinder: **Rohrmann, Jürgen, Dr.**
**Die Ritterwiesen 10**
**D-6237 Liederbach (DE)**
Erfinder: **Spaleck, Walter, Dr.**
**Sulzbacher Strasse 63**
**D-6237 Liederbach (DE)**
Erfinder: **Winter, Andreas, Dr.**
**Gundelhardtstrasse 2**
**D-6233 Kelkheim (Taunus) (DE)**

EP 0 413 326 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Olefinpolymer mit hoher Molmasse und geringem Katalysatorrestgehalt.

Die Herstellung von isotaktischem PP gelingt mit Hilfe des Ethylen-bis-(4,5,6,7)-tetrahydro-1-indenyl)-zirkondichlorids zusammen mit einem Aluminoxan in einer Suspensionspolymerisation (vgl. EP-A 185 918). Das Polymer besitzt eine enge Molmassenverteilung ($M_w/M_n$ 1,6 bis 2,6).

Durch eine spezielle Voraktivierungsmethode konnte eine beträchtliche Steigerung der Aktivität des Katalysatorsystems erzielt werden (vgl. DE 3 726 067). Die Kornmorphologie des Polymeren wurde ebenfalls durch diese Voraktivierungsmethode verbessert.

Die in Gegenwart von Ethylenbisindenylzirkondichlorid hergestellten Polypropylene weisen eine enge Molekulargewichtsverteilung und niedrige Molmassen auf, wie aus den Beispielen 13 - 18 der EP-A-302424 hervorgeht.

Aus EP-A-318049 ist bekannt, daß durch Verwendung $C_1$-$C_4$-verbrückter Zirkonocene kristalline Propylencopolymere erhalten werden.

Die Molmassen der Polymeren, die nach diesen Anmeldungen erhalten werden, sind für eine technische Anwendung noch zu gering.

Es bestand somit die Aufgabe, ein Verfahren zur Herstellung eines hochmolekularen Olefinpolymers zu finden, welches in einem technisch interessanten Temperaturbereich mit großer Katalysatoraktivität durchführbar ist.

Es wurde gefunden, daß die Aufgabe durch Polymerisation von Olefinen in Gegenwart bestimmter Metallocen-Katalysatoren gelöst werden kann.

Die Erfindung betrifft somit ein Verfahren zur Herstellung eines Polyolefins durch Polymerisation eines Olefins der Formel $R^{11}$-CH=CH-$R^{12}$, worin $R^{11}$ und $R^{12}$ gleich oder verschieden sind und ein Wasserstoffatom oder einen $C_1$-$C_{14}$-Alkylrest bedeuten oder $R^{11}$ und $R^{12}$ mit dem sie verbindenden C-Atom einen Ring mit 4 bis 28 C-Atomen bilden, bei einer Temperatur von 0 °C bis 150 °C, bei einem Druck von 0,5 bis 100 bar, in Lösung, in Suspension oder in der Gasphase, in Gegenwart eines Katalysators, welcher aus einem Metallocen und einem Aluminoxan der Formel (II)

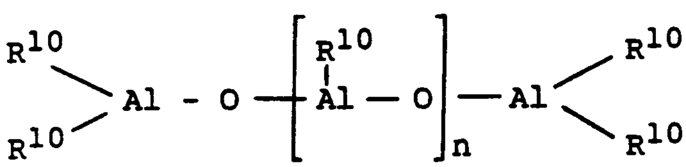

(II)

für den linearen Typ und/oder der Formel (III)

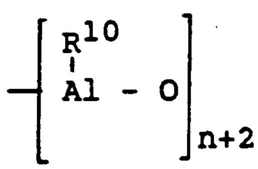

(III)

für den cyclischen Typ besteht, wobei in den Formeln (II) und (III) $R^{10}$ eine $C_1$-$C_6$-Alkylgruppe bedeutet und n eine ganze Zahl von 2 bis 50 ist, dadurch gekennzeichnet, daß das Metallocen mindestens eine Verbindung der Formel (I)

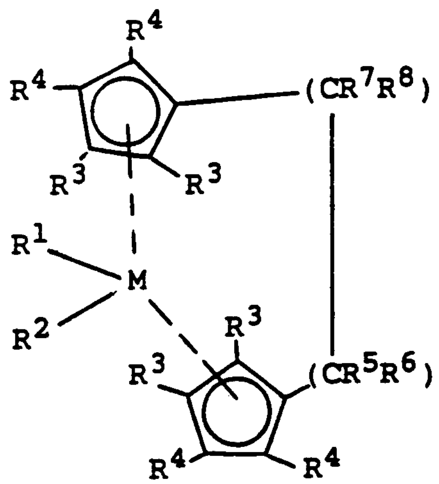

(I)

ist, worin

M Zirkon oder Hafnium ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$ und $R^4$ gleich oder verschieden sind und ein Wasserstoffatom, ein Halogenatom, eine $C_1$-$C_{10}$-Alkylgruppe,
einen $-NR^9_2$ -, $-SR^9$-, $-OR^9$-, $-OSiR^9_3$ -, $-SiR^9_3$ - oder $-PR^9_2$ -Rest bedeuten,
worin $R^9$ eine $C_1$-$C_{10}$-Alkylgruppe, eine $C_6$-$C_{10}$-Arylgruppe oder im Falle Si oder P enthaltender Reste auch ein Halogenatom ist,
oder je zwei benachbarte Reste $R^3$ oder $R^4$ mit den sie verbindenden C-Atomen einen Ring bilden,
$R^5$, $R^6$ und $R^7$ ein Wasserstoffatom und $R^8$ eine Phenyl-, Benzyl-, Methyl-, Ethyl-, Trifluormethyl- oder Methoxygruppe ist oder
$R^5$ und $R^7$ ein Wasserstoffatom und $R^6$ und $R^8$ eine Phenyl, Benzyl-, Ethyl-, Methyl-, Trifluormethyl-oder Methoxygruppe ist.

Der für das erfindungsgemäße Verfahren zu verwendende Katalysator besteht aus einem Aluminoxan und mindestens einem Metallocen der Formel I

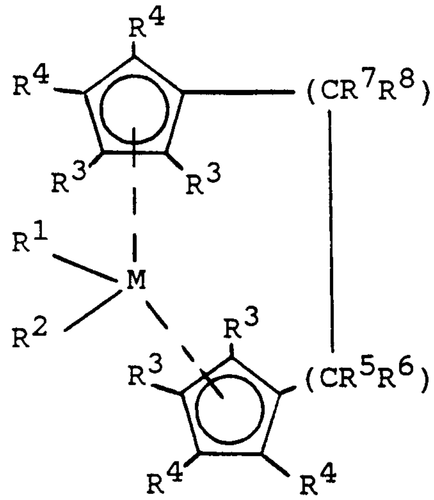

(I)

M ist Hafnium oder Zirkon, bevorzugt Zirkon,
$R^1$ und $R^2$ sind gleich oder verschieden und bedeuten ein Wasserstoffatom, eine $C_1$-$C_{10}$-, vorzugsweise

$C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind gleich oder verschieden und bedeuten ein Wasserstoffatom, ein Halogenatom, vorzugsweise ein Fluor-, Chlor- oder Bromatom, eine $C_1$-$C_{10}$- vorzugsweise $C_1$-$C_3$-Alkylgruppe, einen $-NR^9_2$ -,$-SR^9$-, $-OR^9$-, $-OSiR^9_3$ -, $-SiR^9_3$ -oder $-PR^9_2$ - Rest bedeuten, worin $R^9$ eine $C_1$-$C_{10}$-, vorzugsweise $C_1$-$C_3$-Alkylgruppe oder $C_6$-$C_{10}$-, vorzugsweise $C_6$-$C_8$-Arylgruppe, oder im Falle Si oder P enthaltender Reste auch ein Halogenatom, vorzugsweise Chloratom, ist, oder je zwei benachbarte Reste $R^3$ oder $R^4$ bilden mit den sie verbindenden C-Atomen einen Ring. Besonders bevorzugte Liganden sind Indenyl, Fluorenyl und Cyclopentadienyl.

$R^5$, $R^6$ und $R^7$ sind ein Wasserstoffatom und $R^8$ eine Phenyl-, Benzyl-, Methyl-, Ethyl-, Trifluormethyl oder Methoxygruppe oder $R^5$ und $R^7$ sind ein Wasserstoffatom und $R^6$ und $R^8$ sind eine Phenyl-, Benzyl-, Ethyl-, Methyl-, Trifluormethyl oder Methoxygruppe.

Die vorstehend beschriebenen Metallocene können nach folgendem allgemeinen Reaktionsschema hergestellt werden:

$$H_2R^a + \text{ButylLi} \longrightarrow HR^aLi$$

$$H_2R^b + \text{ButylLi} \longrightarrow HR^bLi \qquad \xrightarrow{X-(CR^7R^8)_m-(CR^5R^6)_n-X}$$

$$HR^a-(CR^7R^8)_m-(CR^5R^6)_n-R^bH \qquad \xrightarrow{2\ \text{ButylLi}}$$

$$LiR^a-(CR^7R^8)_m-(CR^5R^6)_n-R^bLi \qquad \xrightarrow{MCl_4}$$

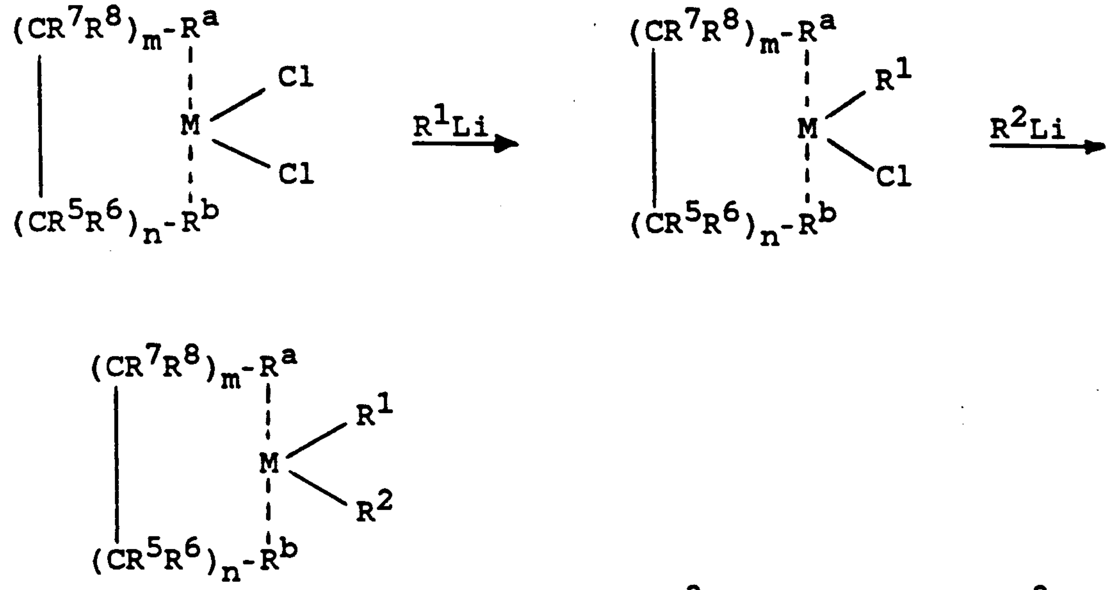


(X = Cl, Br, J, O-Tosyl, $HR^a$ = 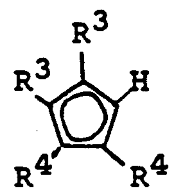 , $HR^b$ = 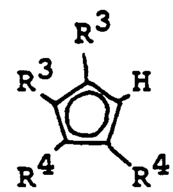 )

Der Cokatalysator ist ein Aluminoxan der Formel II

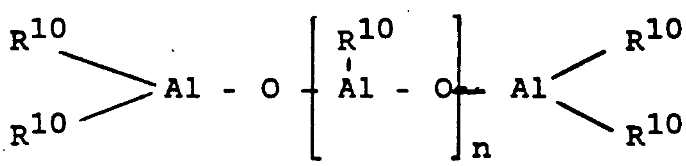

(II)

für den linearen Typ und/oder der Formel (III)

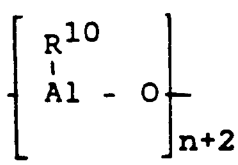

(III)

für den cyclischen Typ. In diesen Formeln bedeuten $R^{10}$ eine $C_1$-$C_6$-Alkylgruppe, vorzugsweise Methyl, Ethyl oder Isobutyl, insbesondere Methyl, und n eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vörzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und die Lösung im Vakuum eingeengt. Es wird

angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 -vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind.

Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.
Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Die Polymerisation wird in bekannter Weise in Lösung, in Suspension oder in der Gasphase, kontinuierlich oder diskontinuierlich, ein- oder mehrstufig bei einer Temperatur von 0 bis 150 °C, vorzugsweise 30 bis 80 °C, durchgeführt. Polymerisiert werden Olefine der Formel $R^{11}$-CH=CH-$R^{12}$. In dieser Formel sind $R^{11}$ und $R^{12}$ gleich oder verschieden und bedeuten ein Wasserstoffatom oder einen Alkylrest mit 1 bis 28 C-Atomen. $R^{11}$ und $R^{12}$ können jedoch auch mit den sie verbindenden C-Atomen einen Ring mit 4 bis 28 C-Atomen bilden. Beispiele für solche Olefine sind Ethylen, Propylen, 1-Buten, 1-Hexen, 4-Methyl-1-penten, 1-Octen, Norbornen, Norbornadien, Penten, Hexen oder Octen. Insbesondere wird Propylen polymerisiert.

Als Molmassenregler wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird die Metallocenverbindung üblicherweise in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich. Als Metallocen wird mindestens eine Verbindung der Formel I eingesetzt. Möglich sind auch Gemische mehrerer Verbindungen der Formel I oder Gemische von Isomeren.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.
Werden inerte. Lösemittel verwendet, werden die Monomeren gasförmig oder flüssig zudosiert.
Wird nur ein Monomer als Suspensionsmittel verwendet, so wird das Comonomere, beziehungsweise werden die Comonomeren gasförmig oder flüssig zudosiert.

Des weiteren ist es möglich, in einer Mischung verschiedener Monomeren als Suspensionsmittel zu polymerisieren; ein weiteres Monomeres kann dann flüssig oder gasförmig zudosiert werden. Bei Verwendung von Ethylen ist es vorteilhaft, einen Teil des Ethylens vorzulegen und den Rest während der Polymerisation zuzudosieren.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die verwendeten Metallocene sehr temperaturstabil sind, so daß sie mit hoher Aktivität auch bei Temperaturen bis 90 °C eingesetzt werden können. Außerdem können die als Cokatalysatoren dienenden Aluminoxane in geringeren Konzentrationen als bisher zugesetzt werden. Schließlich ist es nunmehr möglich, statistische Copolymere bei technisch interessanten Temperaturen herzustellen.

Die erfindungsgemäß zu verwendenden Metallocene oder Metallocen-Gemische enthalten Verbindungen, welche Propylen zu Polymeren mit einer Molmasse von mehr als 150 000 g/mol, vorzugsweise 200 000 g/mol, polymerisieren können. Dies wird durch die Molmassenverteilung, die ein hohes $M_w/M_n$-Verhältnis (> 2) aufweist, bestätigt. Die Molmassenverteilung ist teilweise multimodal.

Synthese von 1.2-Bis(1-indenyl)-1.2-bis(phenyl)ethan (Diastereomerengemisch)

Zu 8,17 g (336 mmol) Magnesiumspänen wurde eine Mischung aus 68,64 g (336 mmol) Methylphenylbenzofulven, 4,92 $cm^3$ (61 mmol) $CCl_4$ und 100 $cm^3$ THF innerhalb von 0,5 h zugegeben. Die durch die eingetretene Reaktion warme Reaktionsmischung wurde dann über Nacht gerührt. Der erhaltene Grignard-Ansatz wurde zu etherischer HCl gegeben und anschließend Wasser zugefügt. Nach Abtrennung wurde die organische Phase über $Na_2SO_4$ getrocknet, filtriert und eingedampft.

Das Rohprodukt wurde säulenchromatographisch gereinigt (50x 250 mm; 60 Å, 70 - 200 $\mu$m, beginnend mit reinem n-Hexan und zunehmendem $H_2CCl_2$-Gehalt).

Ausbeute 3,1 g (7,55 mmol 4,5 %), $r_F$ = 0,26 (vol. 3 Hexan/1 $H_2CCl_2$), Smp. 225 - 230 °C.

**Beispiel 1**

{($\eta^5$-1-Indenyl)-$CH_2$*CHEt-($\eta^5$-1-Indenyl)}$ZrCl_2$ (1)

Zu 12,2 g (42,6 mmol) des Liganden (Racemat) in 200 $cm^3$ THF wurden bei Raumtemperatur 56 $cm^3$ einer 1,6 n (89,6 mmol) Butyllithium-Hexanlösung innerhalb von 1 h zugetropft und der Ansatz bei 60 °C bis 0,5 h nach Beendigung der Butanentwicklung gerührt.

Die erhaltene Dilithiosalzlösung wurde simultan mit einer Lösung von 16,6 g (44 mmol) $ZrCl_4(thf)_2$ in 300 $cm^3$ THF bei Umgebungstemperatur zu 50 $cm^3$ THF innerhalb von 2 h zugetropft. Der Ansatz wurd dann 1,5 h bei Raumtemperatur gerührt und 4 $cm^3$ einer 1,0 n (4 mmol) etherischen HCl-Lösung zugefügt. Nach spontaner Aufhellung der dunklen Reaktionsmischung blieb eine orange Farbe bestehen. Nun wurde das Gemisch auf 200 $cm^3$ eingeengt und die anorganischen Salze durch Toluolzugabe ausgefällt und abfiltriert.

Das Filtrat wurde weiter eingeengt. Als das Volumen noch 100 $cm^3$ betrug, war ein gelboranger Feststoff angefallen. Zur Vervollständigung wurde das Gemisch über Nacht in den Tiefkühlschrank (-35 °C) gestellt, anschließend filtriert, der Niederschlag mit wenig kaltem Toluol und dann mit n-Pentan gewaschen und im Vakuum getrocknet. Ausbeute I: 2,6 g (5,82 mmol = 13,7 %); NMR belegte ein 1:1-Gemisch zweier Komplexe.

Der sich beim weiteren Einengen des Filtrats abscheidende Niederschlag wurde wie vorstehend beschrieben behandelt. Ausbeute II: 3,3 g (7,39 mmol = 17,4 %); NMR zeigte ein Gemisch der Komplexe aus I.

Das Filtrat wurde zur Trockne eingedampft. Ausbeute III: 0,2 g.

Fraktion II wurde in Ether aufgenommen und langsam eingeengt. Der erste angefallene Niederschlag A zeigte nach NMR ein ~ 1:3-Gemisch, wobei der im Fünfringprotonenbereich bei höherem Feld erscheinenden Komplex überwog. Wurde die Prozedur mit A wiederholt, so erhielt man eine Anreicherung auf besser als 1:4 (Niederschlag B, 1,2 g (2,69 mmol = 6,3 %).

Das zur Trockne eingedampfte Filtrat von B enthielt die bei niedrigerem Felde in Resonanz stehende Verbindung angereichert auf mehr als 4:1 (Ausbeute 0,8 g (1,79 mmol = 4,2 %).

Fraktion II zeigte eine korrekte CH-Analyse: gef. 58,5 (ber. 59,18) C; 4,6 (4,51 %) H.

**Beispiel 2**

7,96 g (27,79 mmol) Ligand (Racemat) in 100 $cm^3$ THF und 36 $cm^3$ 1,6 n (57,6 mmol) Butyllithium-Hexanlösung wurden wie in Beispiel 1 beschrieben zum Dilithiosalz umgesetzt. Zu 50 $cm^3$ THF wurden bei Raumtemperatur 10,78 g (28,58 mmol) $ZrCl_4$ $(thf)_2$ in 200 $cm^3$ THF und die Dilithiosalzlösung getropft. Dabei wurde so verfahren, daß immer eine größere Menge an Zirkonverbindung vorgelegt war, d.h. die Zirkonlösung wurde innerhalb von 3 h, die Dilithiosalzlösung in 8,5 h zugegeben. Nach zweistündigem Rühren bei Umgebungstemperatur wurden 2,5 $cm^3$ 1,0 n (2,5 mmol) etherische HCl zugefügt - es erfolgte sofort Aufhellung - und der Ansatz bis auf etwa 100 $cm^3$ eingeengt. Dann wurden 150 $cm^3$ Toluol zugefügt und das Gemisch über Nacht stehengelassen. Der angefallene Niederschlag wurde abgetrennt und das Filtrat eingeengt. Von einer dabei auftretenden kleinen Menge Öl wurde abdekantiert und die Flüssigkeit zur Trockne eingedampft. Das Rohprodukt wurde NMR-spektroskopisch untersucht. Es zeigte die aus Beispiel 1 bekannten Spezies als Hauptkomponenten und mindestens eine weitere Verbindung. Es wurde mit 2 x 120 $cm^3$ $Et_2O$ extrahiert und das Filtrat eingedampft. Sein NMR-Spektrum zeigt neben den aus Beispiel 1 bekannten Signalen weitere Resonanzen im Fünfringprotonenbereich. Die weiteren angefallenen Etherextrakte ($\Sigma$ 1 $cm^3$) wurden zur Trockne eingedampft. Es fielen 10,5 g gelber Feststoff an (23,5 mmol = 84,6 %; NMR: zwei Komplexe).

**Beispiel 3**

$\{(\eta^5\text{-1-Indenyl})\text{-}CH_2{}^*CHMe\text{-}(\eta^5\text{-1-Indenyl})ZrCl_2$ (2)

Zu 7,7 g (30,53 mmol) Ligand (Racemat) in 100 $cm^3$ THF wurden bei Raumtemperatur innerhalb von 1 h 41 $cm^3$ 1,6 n (65,6 mmol) Butyllithium-Hexanlösung zugetropft und der Ansatz 0,5 h bis nach Beendigung der Butanentwicklung bei 60 °C gerührt.
11,7 g (31,01 mmol) $ZrCl_4(thf)_2$ in 250 $cm^3$ THF wurden simultan mit der Dilithiosalzlösung zu 50 $cm^3$ THF bei Umgebungstemperatur innerhalb von 5 h zugegeben. Nach zweitägigem Rühren bei Raumtemperatur wurden 4 $cm^3$ (4 mmol) etherische HCl zugegeben. Die nun klare, gelborange Reaktionsmischung wurde zur Trockne eingeengt. Der orangerote Eindampfrückstand wurde mit 6 x 80 $cm^3$ Toluol extrahiert, filtriert und eingeengt. Von einem beim Einengen auf 200 $cm^3$ anfallenden Öl wurde abdekantiert und das Filtrat weiter auf 80 $cm^3$ eingeengt. Der dabei anfallende Niederschlag A wurde abfiltriert, mit wenig n-Pentan gewaschen und im Vakuum getrocknet. Ausbeute A: 1,85 g (4,28 mmol = 14 %); NMR belegt zwei Komplexe.

Das Filtrat wurde auf 30 $cm^3$ weiter eingeengt und über Nacht kaltgestellt (-35 °C), vom Niederschlag B abdekantiert und zur Trockne eingedampft (0,1 g; NMR zeigte Edukte, d.h. Ligand und $ZrCl_4(thf)_2$, Toluol und vermutlich vier Komplexe). Der Niederschlag B wurde mit Pentan gewaschen und im Vakuum getrocknet. Ausbeute: B 0,7 g (1,62 mmol = 5,3 %); NMR zeigte das Vorliegen eines Vierkomponentengemisches.

Die Elementaranalyse erbrachte folgendes Ergebnis: gef. 57,9 % (ber. 58,32) C, 4,2 % (4,4) H.

**Beispiel 4**

$\{(\eta^5\text{-1-Indenyl})\text{-}CH_2{}^*CH(Benzyl)\text{-}(\eta^5\text{-1-indenyl})\}ZrCl_2$ (3)

Zu 4,53 g (13 mmol) Ligand in 75 $cm^3$ THF wurden 17,25 $cm^3$ 1,6 n (27,6 mmol) Butyllithium-Hexanlösung getropft und der Ansatz anschließend bei 55 °C bis 0,5 h nach Beendigung der Gasentwicklung gerührt.
Diese Dilithiosalzlösung wurde simultan mit 4,9 g (12,99 mmol) $ZrCl_4(thf)_2$ in 100 $cm^3$ THF zu 30 $cm^3$ THF innerhalb von 6 h bei Raumtemperatur zugegeben, zur Trockne eingedampft, in Toluol aufgenommen und filtriert. Nach Abziehen des Lösemittels wurde der Rückstand mehrmals mit n-Pentan digeriert, wobei das Pentan abdekantiert wurde. Der nun erhaltene Rückstand wurde getrocknet. Ausbeute: 2,28 g (ca. 4,47 mmol = 34,4 %); NMR bestätigte das Vorliegen von mindestens drei Komplexen, verunreinigt mit THF und Pentan.

**Beispiel 5**

$\{(\eta^5\text{-1-Indenyl})\text{-}{}^*CHPh{}^*CHPh\text{-}(\eta^5\text{-1-Indenyl})\}ZrCl_2$ (4)

Zu 2,04 g (4,97 mmol) Ligand (Diastereomerengemisch) in 40 $cm^3$ THF wurden 6,25 $cm^3$ 1,6 n (10 mmol)

Butyllithium-Hexanlösung bei Raumtemperatur zugetropft. Dabei schied sich etwa nach Hälfte der Zugabe ein weißgrüner Niederschlag ab. Nach zweistündigem Rühren bei 60 °C wurde das angefallene Dilithiosalz portionsweise zu 1,88 g (4,98 mmol) $ZrCl_4(thf)_2$, gelöst in 40 $cm^3$ THF, bei 0 °C zugegeben. Im Anschluß daran wurde der Ansatz 4 h bei Umgebungstemperatur gerührt und zur Trockne eingeengt, mit einem warmen (ca. 40 °C) n-Pentan/Toluol-Gemisch (vol. 2:1) extrahiert, filtriert und die erhaltene klare, gelbe Lösung eingeengt. Ein dabei angefallener gelber Niederschlag A wurde abfiltriert, mit wenig kaltem $Et_2O$ gewaschen und im Vakuum getrocknet. Ausbeute A: 0,45 g (ca. 0,86 mmol = 17,7 %); NMR zeigte neben Lösemitteln ($Et_2O$, THF, n-Pentan, Toluol) Signale mit für Indenylkomplexfünfringprotonen charakteristischen Aufspaltungsmuster mindestens zweier Komplexverbindungen. Zum Filtrat wurden 25 $cm^3$ n-Pentan zugefügt und der gefällte Niederschlag B abfiltriert, mit wenig kaltem $Et_2O$ gewaschen und im Vakuum getrocknet. Ausbeute B: 1,08 g (1,57 mmol = 31,5 %); NMR zeigte neben den Signalen von Toluol und Pentan das vermutliche Vorliegen einer einzigen Komplexspezies, die in A nicht vorhanden war.
Das Filtrat von B wurde zur Trockne eingedampft. Sein NMR zeigte neben $Et_2O$, Pentan und Toluol vermutlich Signale des Komplexes aus Niederschlag B und des Liganden.

**Beispiel 6**

$\{(\eta^5\text{-1-Indenyl})\text{-}CH_2{}^*CHMe\text{-}(\eta^5\text{-1-Indenyl})\}HfCl_2$ (6)

Zu 7,2 g (26,95 mmol) Liganden (Racemat) in 200 $cm^3$ THF wurden bei Raumtemperatur 34 $cm^3$ 1,6 n (54,4 mmol) Butyllithium-Hexanlösung innerhalb einer Stunde zugetropft und im Anschluß daran der Ansatz 1 h bei 60 °C gerührt. Die Dilithiosalzlösung wurde dann simultan mit 13 g (28 mmol) $HfCl_4(thf)_2$ in 200 $cm^3$ THF zu 50 $cm^3$ THF zusammengetropft, wobei so verfahren wurde, daß ein Hf-Überschuß im Reaktionsgefäß vorlag. Nach Zugabe von 2/3 wurde der Ansatz über Nacht stehen gelassen und der Rest der Reaktionspartner innerhalb von 4 h zugegeben. Darauf wurde der Ansatz über Nacht gerührt und 4 $cm^3$ 1,0 n (4,0 mmol) etherische HCl zugefügt, wobei Farbaufhellung beobachtet wurde.
Der gelbbraune Eindampfrückstand wurde mit Toluol extrahiert, filtriert und zur Trockne eingedampft. Der erhaltene Rückstand I wurde mit n-Pentan digeriert, das filtrierte Lösemittel abgezogen und der Rest von ca. 25 $cm^3$ vom angefallenen Niederschlag abgetrennt.
Ausbeute A: 0,61 g (1,14 mmol = 4,2 %); NMR zeigte neben den Signalen des Liganden Resonanzen im Indenylfünfringprotonenbereich, die das Vorliegen dreier Komplexverbindungen belegen, wobei zwei als Hauptkomponenten vorliegen.
Rückstand I wurde noch mit Pentan/$Et_2O$ (vol. 1:2) extrahiert, filtriert und das Filtrat eingeengt. Ausbeute B: 0,26 g (0,49 mmol = 1,8 %); NMR belegte das Vorliegen eines komplexen Stoffgemisches, augenscheinlich von vier Verbindungen (vier Methylgruppen-Tripletts der Ethylgruppe im Bereich von 1,25 - 0,85 ppm).
Es wurde folgende Elementaranalyse gefunden: ber. 49,5 (gef. 50,9) C; 3,78 (4,1 %) H.

**Beispiel 7**

$\{(\eta^5\text{-1-Indenyl})\text{-}CH_2CHEt\text{-}(\eta^5\text{-1-Indenyl})\}Zr(CH_3)_2$ (5)

Zu 1,45 g (3,25 mmol) einer Suspension zweier Komplexverbindungen in 50 $cm^3$ $Et_2O$ wurden bei -40 °C 4,1 $cm^3$ 1,6 n (6,56 mmol) Methyllithium-Etherlösung zugetropft. Nachdem ein größerer Teil in Lösung gegangen war und ein schmutzigweißer Niederschlag auftrat, wurde zur Trockne eingedampft. Nach Extraktion mit 200 $cm^3$ n-Pentan und Filtration wurde das Lösemittel abgezogen und der Rückstand im Vakuum getrocknet.
Ausbeute 1,15 g (ca. 2,83 mmol = 87,0 %); NMR zeigte neben einigen Verunreinigungen, vermutlich monomethylierter Verbindungen, zwei Hauptkomponenten mit für $CH_3Zr$-Spezies typischen Resonanzen im Hochfeldbereich, nämlich für die syn-form erwartungsgemäß zwei Resonanzen, bei -0,76 und -0,88 ppm und für die anti-Form, welche durch die unsymmetrische $C_2$-Brücke keine $C_2$-Symmetrie mehr besitzt, zwei Signale bei fast identischer Verschiebung von -1,02 ppm.

**Beispiele 7 bis 10 und Vergleichsbeispiel A**

Ein trockener 16 $dm^3$-Kessel wurde mit Stickstoff gespült und bei 20 °C mit 10 $dm^3$ eines Benzins (Siedebereich 100-120 °C) gefüllt. Dann wurde der Gasraum des Kessels durch 5-maliges Aufdrücken von 2 bar Ethylen und Entspannen stickstofffrei gespült. Hiernach wurden 30 $cm^3$ toluolische Methylaluminoxanlösung (10,5 Gew.-% Methylaluminoxan, Molmasse nach kryoskopischer Bestimmung: 750 g/mol) zugegeben.

Unter Rühren wurde der Kesselinhalt innerhalb von 15 Minuten auf 60 °C aufgeheizt. Durch Zuführen von Ethylen unter Rühren mit 250 UPM wurde der Gesamtdruck dann auf 5 bar eingestellt. Parallel dazu wurden 3,1 mg Metallocen in 20 $cm^3$ toluolischer Methylaluminoxanlösung (Konzentration und Qualität wie oben) gelöst und durch 15-minütiges Stehenlassen voraktiviert. Danach wurde die Lösung in den Kessel gegeben. Das Polymerisationssystem wurde auf eine Temperatur von 65 °C gebracht und dann durch entsprechende Kühlung 1 Stunde bei dieser Tempertur gehalten. Der Gesamtdruck wurde während dieser Zeit durch entsprechende Zufuhr von Ethylen bei 5 bar gehalten. Es wurden die in der Tabelle 1 aufgeführten Mengen erhalten.

In den Tabellen sind die folgenden Abkürzungen verwendet worden:
VZ = Viskositätszahl in $cm^3/g$,
Mw = Molmassengewichtsmittel in g/mol
Mw/Mn = Polydispersität ermittelt durch Gelpermeationschromatographie (GPC)
II = Isotaxie bestimmt durch $^{13}C$-NMR Spektroskopie,
SD = Schüttdichte, $T_g$ = Glasumwandlungstemperatur.

**Beispiele 11 und 12 und Vergleichsbeispiel B**

Ein sauberer und trockener 1,5 $dm^3$-Polymerisationsreaktor mit Rührer wurde mit Stickstoff und dann mit Ethylen gespült und mit einer Losung von Norbornen in 750 $cm^3$ Toluol gefüllt. Unter Rühren wurde dann der Reaktor auf eine Temperatur von 20 °C gebracht und 1 bar Ethylen aufgedrückt. Danach wurden 20 $cm^3$ toluolische Methylaluminoxanlösung (10,1 Gew.-% Methylaluminoxan mit Molmasse 1300 g/mol kryoskopischer Bestimmung) in den Reaktor dosiert und die Mischung 15 min bei 20 °C gerührt, wobei durch Nachdosieren der Ethylendruck bei 1 bar gehalten wurde (Sättigung des Toluols mit Ethylen). Parallel dazu wurde das Metallocen in 10 $cm^3$ toluolischer Methylaluminoxanlösung (Konzentration und Qualität s.o.) gelöst und durch 15 minütiges Stehenlassen voraktiviert. Dann wurde die Lösung des Komplexes in den Reaktor dosiert. Unter Rühren (750 UPM) wurde dann 1 h bei 20 °C polymerisiert, wobei der Ethylendruck durch Nachdosieren bei 1 bar gehalten wurde. Dann wurde der Reaktorinhalt schnell in ein Rührgefäß abgelassen, in dem 100 $cm^3$ Isopropanol vorgelegt waren. Diese Mischung wurde mit 2 $dm^3$ Aceton versetzt, 10 min gerührt und dann der suspendierte polymere Feststoff abfiltriert. Das abfiltrierte Polymere wurde dann in 600 $cm^3$ einer Mischung aus zwei Teilen 3-normaler Salzsäure und einem Teil Ethanol gegeben und diese Suspension 2 h gerührt. Das Polymere wurde dann erneut abfiltriert, mit Wasser neutral gewaschen und bei 80 °C und 0,2 bar 15 h getrocknet.
Die Ergebnisse der Versuche sind in Tabelle 2 zusammengefaßt.

**Beispiele 13 bis 15 und Vergleichsbeispiel C**

Ein sauberer und trockener 1,5 $dm^3$-Polymerisationsreaktor mit Rührer wurde mit Stickstoff und dann mit Propylen gespült und mit einer Lösung von 30 g Norbornen in 750 $cm^3$ Toluol gefüllt. Unter Rühren wurde dann der Reaktor auf eine Temperatur von 20 °C gebracht und 1 bar Propylen aufgedrückt. Danach wurden 20 $cm^3$ toluolische Methylaluminoxanlösung (10,1 Gew.-% Methylaluminoxan mit Molmasse 1300 g/mol) in den Reaktor dosiert und die Mischung 15 min bei 20 °C gerührt, wobei durch Nachdosieren der Propylendruck bei 1 bar gehalten wurde (Sättigung des Toluols mit Propylen). Parallel dazu wurde das Metallocen in 10 $cm^3$ toluolischer Methylaluminoxanlösung (Konzentration und Qualität s.o.) gelöst und durch 15 minütiges Stehenlassen voraktiviert. Dann wurde die Lösung des Komplexes in den Reaktor dosiert. Unter Rühren (750 UPM) wurde danach 3 h bei 20 °C polymerisiert, wobei der Propylendruck durch Nachdosieren bei 1 bar gehalten wurde. Dann wurde der Reaktorinhalt schnell in ein Rührgefäß abgelassen, in dem 100 $cm^3$ Isopropanol vorgelegt waren. Diese Mischung wurde mit 2 $dm^3$ Aceton versetzt, 30 min gerührt und der suspendierte polymere Feststoff abfiltriert. Das abfiltrierte Polymere wurde dann in 600 $cm^3$ einer Mischung aus zwei Teilen 3-normaler Salzsäure und einem Teil Ethanol gegeben und diese Suspension 2 h gerührt. Danach wurde die Mischung mit 200 $cm^3$ Toluol versetzt und nach weiteren 5 min Rühren die toluolische Phase abgetrennt und mit 1 $dm^3$ Aceton versetzt. Das durch Extraktion der salzsauren Mischung in Toluol gelöste Polymere wurde dabei ausgefällt. Der ausgefällte polymere Feststoff wurde abfiltriert und bei 80 °C und 0,2 bar 15 h getrocknet.
Die Versuchsergebnisse sind in Tabelle 3 zusammengefaßt.

**Beispiele 16 bis 47**

Ein trockener 16 $dm^3$ Kessel wurde mit Stickstoff gespült und mit 10 $dm^3$ flüssigem Propylen befüllt. Dann wurden zwei Drittel der in Tabelle 4 für den jeweiligen Versuch angegebenen MAO-Menge als toluolische Lösung zugegeben und der Ansatz bei 30 °C 15 Minuten gerührt.
Parallel dazu wurde eine Lösung des Metallocens in einem Drittel der in Tabelle 4 angegebenen MAO-Menge hergestellt und durch 15 minütiges Stehenlassen voraktiviert. Die Metallocene (Beispiele 1 bis 7) wurden ohne weitere Reinigung als Gemische von Verbindungen bzw. als Isomerengemische eingesetzt.

Diese Lösung wurde dann in den Kessel gegeben. Das Polymerisationssystem wurde auf die entsprechende Polymerisationstemperatur gebracht und die Polymerisation gestartet. Die Polymerisation wurde nach 60 Minuten durch Abkühlen des Reaktors und Entspannen gestoppt. Die erhaltene Polymerausbeute und die ermittelten analytischen Daten sind Tabelle 4 zu entnehmen.

Tabelle 1

| Bsp. | Metallocen | Katalysator-einwaage (mg) | Ausbeute PE (g) | SD ($g/cm^3$) | VZ ($cm^3/g$) | $M_w$ ($10^3 g/mol$) | $M_w/M_n$ |
|---|---|---|---|---|---|---|---|
| A (Vergleich) | rac-Ethylen-bis-(1-indenyl) zirkondichlorid | 4,2 | 430 | 120 | 220 | 160 | 3,1 |
| 7 | rac-Methylethylen-bis-(1-indenyl) zirkondichlorid | 5,3 | 250 | 50 | 390 | | |
| 8 | rac-Ethylethylen-bis-(1-indenyl) zirkondichlorid | 5,1 | 290 | 130 | 290 | | |
| 9 | rac-1,2-Diphenyl-ethylen-bis-(1-indenyl)-zirkondichlorid | 9,6 | 50 | 80 | 510 | | |
| 10 | dito (einzelnes Isomeres) | 10,1 | 60 | 150 | 320 | | |

Tabelle 2

| Bsp. | Metallocen | Katalysator-einwaage (mg) | Norbornen-Einsatz (g) | Ausbeute (g) | VZ ($cm^3/g$) | Tg (°C) |
|---|---|---|---|---|---|---|
| B (Vergleich) | $Zr(Ind)_2EtCl_2$ | 10,2 | 50 | 20 | 260 | 65,3 |
| 11 | $Zr(Ind)_2Et{*}EtCl_2$ | 6,0 | 50 | 30 | 164 | 67,5 |
| 12 | $Zr(Ind)_2Et{*}MeCl_2$ | 4,0 | 60 | 5,5 | 180 | 71,7 |

**Tabelle 3**

| Bsp. | Metallocen | Katalysator-einwaage (mg) | Norbornen-Einsatz (g) | Ausbeute (g) | VZ ($cm^3/g$) | $T_g$ (°C) |
|---|---|---|---|---|---|---|
| C (Vergleich) | $Zr(Ind)_2EtCl_2$ | 30,2 | 30 | 5,5 | 25 | 93,4 |
| 13 | $Zr(Ind)_2Et*EtCl_2$ | 29,9 | 30 | 28,0 | 23 | 101,0 |
| 14 | $Zr(Ind)_2Et*MeCl_2$ | 30,1 | 30 | 23 | 25 | 99,0 |
| 15 | $Zr(Ind)_2Et*Ph_2Cl_2$ | 120,4 | 30 | 0,2 | 18 | 79,7 |

**Tabelle 4**

| Bsp. | Metallocen | Katalysator | Temp. °C | Kontaktmenge (mg) | Ausbeute (g) | Aktivität (kgPP/gKO/h) | MAO (mmol Al) | Schüttgewicht (g/cm³) | VZ (cm³/g) | $M_w$ (g/mol) | $M_w/M_n$ |
|---|---|---|---|---|---|---|---|---|---|---|---|
| 16 | $Zr(Ind)_2C_2EtMe_2$ | 5 | 70 | 10,0 | 1764 | 176,4 | 74 | 420 | 53 | 55 000 | 4,4 |
| 17 | $Zr(Ind)_2EtMeCl_2$ | 2 | 70 | 10,8 | 1718 | 159,1 | 74 | | 60 | 48 000 | 3,6 |
| 18 | | | 60 | 15,0 | 1750 | 116,7 | 74 | | 64 | 62 000 | 3,6 |
| 19 | | | 50 | 13,3 | 887 | 66,7 | 74 | | 0 | 77 000 | 4,6 |
| 20 | | | 40 | 22,4 | 347 | 15,5 | 74 | | 0 | 81 000 | 4,3 |
| 21 | $Zr(Ind)_2Et^*EtCl_2$ | 1a | 70 | 16,0 | 2154 | 134,6 | 80 | | 0 | 28 000 | 4,8 |
| 22 | | | 60 | 16,0 | 1717 | 107,3 | 80 | | 0 | 22 500 | 3,5 |
| 23 | | | 50 | 15,0 | 636 | 42,4 | 80 | 268 | 42 | 37 000 | 4,9 |
| 24 | | | 40 | 28,0 | 291 | 10,4 | 72 | | 0 | 71 000 | 2,7 |
| 25 | $Zr(Ind)_2Et^*EtCl_2$ | 1b | 40 | 50,0 | 1085 | 21,7 | 80 | | 76 | 88 500 | 5,4 |
| 26 | | | 50 | 36,5 | 1212 | 33,2 | 80 | 172 | 70 | 69 000 | 5,8 |
| 27 | | | 60 | 15,0 | 672 | 44,8 | 80 | 265 | 53 | 55 000 | 4,2 |
| 28 | | | 70 | 15,0 | 995 | 66,3 | 80 | 381 | 53 | 51 000 | 4,0 |
| 29 | $Zr(Ind)_2Et^*EtCl_2$ | 1c | 40 | 15,0 | 563 | 37,5 | 80 | 120 | 142 | 163 000 | 4,2 |
| 30 | | | 50 | 20,0 | 1280 | 64,0 | 80 | 100 | 96 | 106 500 | 3,6 |
| 31 | | | 60 | 15,5 | 1049 | 67,7 | 80 | 185 | 78 | 77 500 | 3,6 |
| 32 | | | 70 | 23,3 | 2649 | 113,7 | 80 | 530 | 63 | 53 500 | 2,8 |
| 33 | $Zr(Ind)_2Et^*EtCl_2$ | 1d | 40 | 30,0 | 1659 | 55,3 | 80 | 200 | 47 | 36 000 | 4,4 |
| 34 | | | 50 | 20,5 | 1960 | 95,6 | 80 | 335 | 47 | 38 000 | 5,3 |
| 35 | | | 60 | 20,0 | 2450 | 122,5 | 80 | 470 | 52 | 49 000 | 5,5 |
| 36 | $Zr(Ind)_2Et^*CH_2PhCl_2$ | 3 | 40 | 60,0 | 162 | 2,7 | 74 | 106 | 90 | 86 000 | 8,9 |
| 37 | | | 50 | 50,0 | 300 | 6,0 | 74 | 90 | 102 | 86 000 | 4,8 |
| 38 | | | 60 | 50,0 | 480 | 9,6 | 74 | 204 | 75 | 66 000 | 6,6 |
| 39 | | | 70 | 50,0 | 810 | 16,2 | 74 | 334 | 67 | 49 000 | 6,9 |
| 40 | $Zr(Ind)_2Et^*(Ph)_2Cl_2$ | 4a | 40 | 35,0 | 256 | 7,3 | 80 | | | | |
| 41 | | | 50 | 15,0 | 300 | 20,0 | 80 | 424 | 84 | 70 000 | 2,4 |
| 42 | | | 60 | 15,0 | 474 | 31,6 | 80 | | 65 | 49 000 | 2,4 |
| 43 | | | 70 | 18,0 | 961 | 53,4 | 80 | 275 | | | |
| 44 | $Zr(Ind)_2Et^*(Ph)_2Cl_2$ | 4b | 40 | 50,0 | 90 | 1,8 | 74 | 140 | 94 | 60 000 | 2,6 |
| 45 | | | 50 | 50,0 | 115 | 2,3 | 74 | 140 | 68 | 60 000 | 2,9 |
| 46 | | | 60 | 50,0 | 250 | 5,0 | 74 | | 65 | 70 000 | 2,4 |
| 47 | | | 70 | 50,0 | 420 | 8,4 | 74 | 176 | 59 | 49 000 | 3,5 |

## Patentansprüche

1. Verfahren zur Herstellung eines Polyolefins durch Polymerisation eines Olefins der Formel $R^{11}$-CH=CH-$R^{12}$, worin $R^{11}$ und $R^{12}$ gleich oder verschieden sind und ein Wasserstoffatom oder einen $C_1$-$C_{14}$-Alkylrest bedeuten oder $R^{11}$ und $R^{12}$ mit dem sie verbindenden C-Atom einen Ring mit 4 bis 28 C-Atomen bilden, bei einer Temperatur von 0 °C bis 150 °C, bei einem Druck von 0,5 bis 100 bar, in Lösung, in Suspension oder in der Gasphase, in Gegenwart eines Katalysators, welcher aus einem Metallocen und einem Aluminoxan der Formel (II)

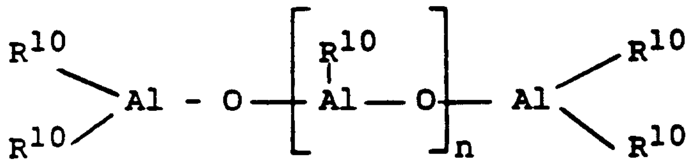

(II)

für den linearen Typ und/oder der Formel (III)

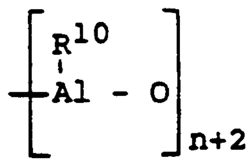

(III)

für den cyclischen Typ besteht, wobei in den Formeln (II) und (III) $R^{10}$ eine $C_1$-$C_6$-Alkylgruppe bedeutet und n eine ganze Zahl von 2 bis 50 ist, dadurch gekennzeichnet, daß das Metallocen mindestens eine Verbindung der Formel (I)

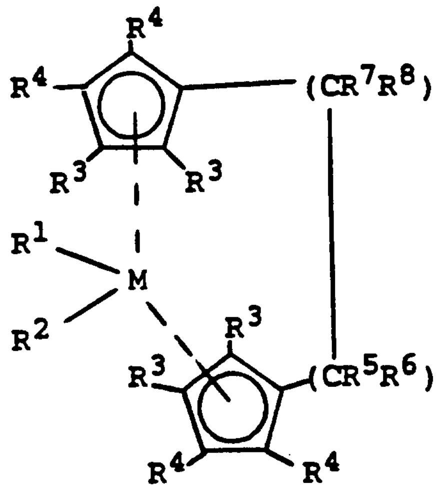

(I)

ist, worin

M Zirkon oder Hafnium ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$ und $R^4$ gleich oder verschieden sind und ein Wasserstoffatom, ein Halogenatom, eine $C_1$-$C_{10}$-Alkylgruppe,
einen $-NR^9_2$ -, $-SR^9$-, $-OR^9$-, $-OSiR^9_3$ -, $-SiR^9_3$ - oder $-PR^9_2$ -Rest bedeuten,
worin $R^9$ eine $C_1$-$C_{10}$-Alkylgruppe, eine $C_6$-$C_{10}$-Arylgruppe oder im Falle Si oder P enthaltender Reste auch ein Halogenatom ist,

oder je zwei benachbarte Reste $R^3$ oder $R^4$ mit den sie verbindenden C-Atomen einen Ring bilden,

$R^5$, $R^6$ und $R^7$ ein Wasserstoffatom und $R^8$ eine Phenyl-, Benzyl-, Methyl-, Ethyl, Trifluormethyl- oder Methoxygruppe ist oder $R^5$ und $R^7$ ein Wasserstoffatom und $R^6$ und $R^8$ eine Phenyl-, Benzyl-, Ethyl-, Methyl-, Trifluormethyl-oder Methoxygruppe ist.

**2.** Metallocen-Verbindung der Formel (I)

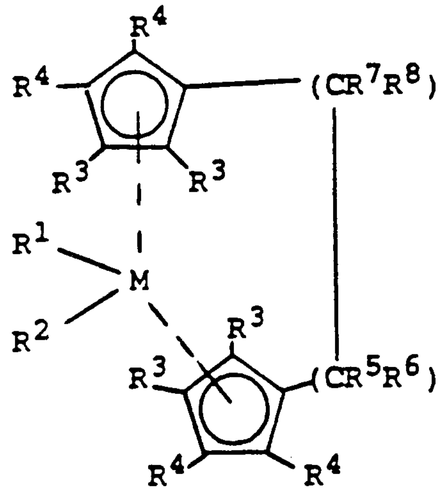

(I)

worin

M Zirkon oder Hafnium ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$ und $R^4$ gleich oder verschieden sind und ein Wasserstoffatom, ein Halogenatom, eine $C_1$-$C_{10}$-Alkylgruppe, einen $-NR^9_2$ -, $-SR^9$-, $-OR^9$-, $-OSiR^9_3$ -, $-SiR^9_3$ - oder $-PR^9_2$ -Rest bedeuten, worin $R^9$ eine $C_1$-$C_{10}$-Alkylgruppe, eine $C_6$-$C_{10}$-Arylgruppe oder im Falle Si oder P enthaltender Reste auch ein Halogenatom ist,

oder je zwei benachbarte Reste $R^3$ oder $R^4$ mit den sie verbindenden C-Atomen einen Ring bilden,

$R^5$, $R^6$ und $R^7$ ein Wasserstoffatom und $R^8$ eine Phenyl-, Benzyl-, Methyl-, Ethyl-, Trifluormethyl- oder Methoxygruppe ist oder $R^5$ und $R^7$ ein Wasserstoffatom und $R^6$ und $R^8$ eine Phenyl-, Benzyl-, Ethyl-, Methyl-, Trifluormethyl- oder Methoxygruppe sind.

## Claims

**1.** A process for the preparation of a polyolefin by polymerization of an olefin of the formula $R^{11}$-CH = CH-$R^{12}$, in which $R^{11}$ and $R^{12}$ are identical or different and are a hydrogen atom or a $C_1$-$C_{14}$-alkyl radical, or $R^{11}$ and $R^{12}$, together with the carbon atom joining them, form a ring having 4 to 28 carbon atoms, at a temperature of 0 °C to 150 °C, under a pressure of 0.5 to 100 bar, in solution, in suspension or in the gas phase and in the presence of a catalyst which consists of a metallocene and an aluminoxane of the formula (II)

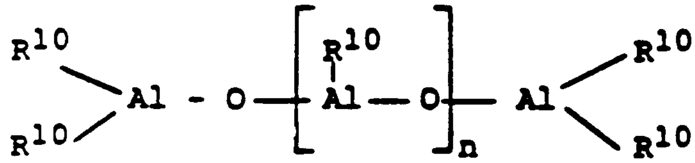

(II)

for the linear type, and/or of the formula (III)

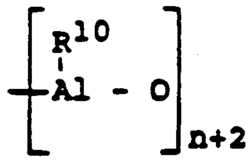

(III)

for the cyclic type, in which, in the formulae (II) and (III), $R^{10}$ is a $C_1$-$C_6$-alkyl group and n is an integer from 2 to 50, wherein the metallocene is at least one compound of the formula (I)

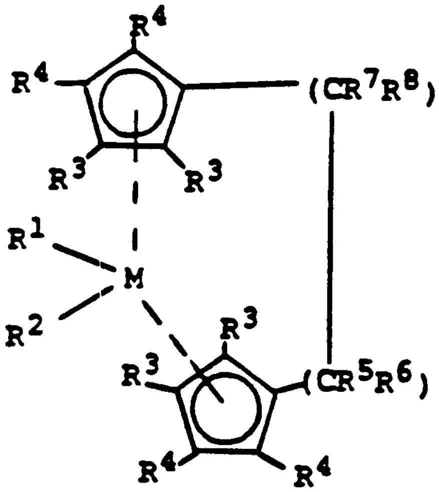

(I)

in which

| | |
|---|---|
| M | is zirconium or hafnium, |
| $R^1$ and $R^2$ | are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom, |
| $R^3$ and $R^4$ | are identical or different and are a hydrogen atom, a halogen atom, a $C_1$-$C_{10}$-alkyl group or a $-NR^9_2$, $-SR^9$, $-OR^9$, $-OSiR^9_3$, $-SiR^9_3$ or $-PR^9_2$ radical, in which $R^9$ is a $C_1$-$C_{10}$-alkyl group, a $C_6$-$C_{10}$-aryl group or, in the case of radicals containing Si or P, also a halogen atom, or in each case two adjacent radicals $R^3$ or $R^4$, together with the carbon atoms joining them, form a ring and |
| $R^5$, $R^6$ and $R^7$ | are a hydrogen atom and $R^8$ is a phenyl, benzyl, methyl, ethyl, trifluoromethyl or methoxy group or $R^5$ and $R^7$ are a hydrogen atom and $R^6$ and $R^8$ are a phenyl, benzyl, ethyl, methyl, trifluoromethyl or methoxy group. |

**2.** A metallocene compound of the formula (I)

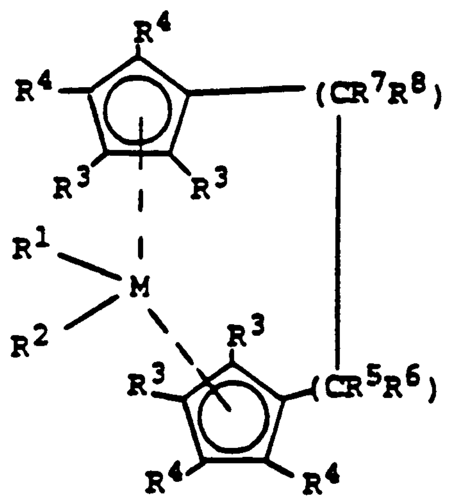

(I)

in which

| | |
|---|---|
| M | is zirconium or hafnium, |
| $R^1$ and $R^2$ | are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom, |
| $R^3$ and $R^4$ | are identical or different and are a hydrogen atom, a halogen atom, a $C_1$-$C_{10}$-alkyl group or a $-NR^9_2$, $-SR^9$, $-OR^9$, $-OSiR^9_3$, $-SiR^9_3$ or $-PR^9_2$ radical, in which $R^9$ is a $C_1$-$C_{10}$-alkyl group, a $C_6$-$C_{10}$-aryl group or, in the case of radicals containing Si or P, also a halogen atom, or in each case two adjacent radicals $R^3$ or $R^4$, together with the carbon atoms joining them, form a ring and |
| $R^5$, $R^6$ and $R^7$ | are a hydrogen atom and $R^8$ is a phenyl, benzyl, methyl, ethyl, trifluoromethyl or methoxy group or $R^5$ and $R^7$ are a hydrogen atom and $R^6$ and $R^8$ are a phenyl, benzyl, ethyl, methyl, trifluoromethyl or methoxy group. |

**Revendications**

**1.** Procédé pour la préparation d'une polyoléfine par polymérisation d'une oléfine de formule $R^{11}$-CH = CH-$R^{12}$, où $R^{11}$ et $R^{12}$ sont identiques ou différents et représentent un atome d'hydrogène ou un radical alkyle en $C_1$-$C_4$ ou $R^{11}$ et $R^{12}$, avec l'atome de C qui les relie, forment un cycle avec 4 à 28 atomes de carbone, à une température de 0 °C à 150 °C, sous une pression de 0,5 à 100 bars, en solution, en suspension ou en phase gazeuse, en présence d'un catalyseur, qui se compose d'un métallocène et d'un aluminoxane de formule (II) :

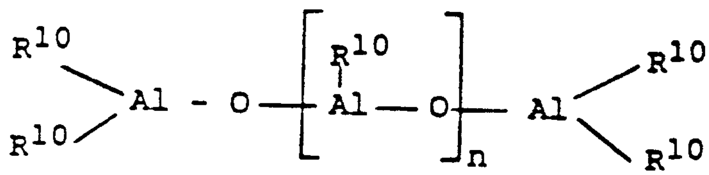

(II)

pour le type linéaire et/ou de formule (III) :

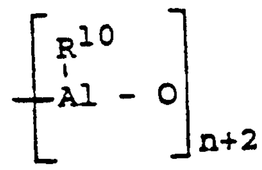

(III)

pour le type cyclique, où dans les formules (II) et (III) $R^{10}$ représente un groupe alkyle en $C_1$-$C_6$ et n un nombre entier de 2 à 50, caractérisé en ce que le métallocène est au moins un composé de formule (I),

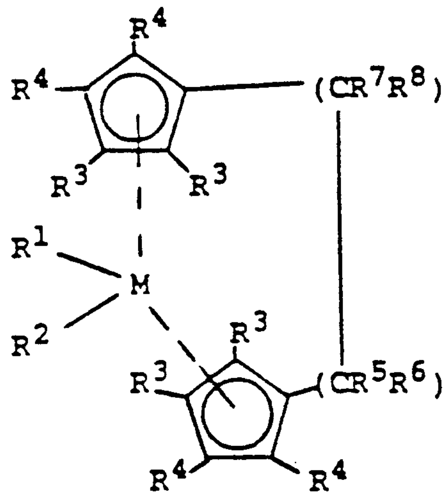

dans laquelle

M est le zirconium ou l'hafnium,

$R^1$ et $R^2$ sont identiques ou différents et représentent un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène,

$R^3$ et $R^4$ sont identiques ou différents et représentent un atome d'hydrogène, un atome d'halogène, un groupe alkyle en $C_1$-$C_{10}$, un radical $-NR^9_2$ -, $-SR^9$-, $-OR^9$-, $-OSiR^9_3$ -, $-SiR^9_3$ - ou $-PR^9_2$ -,
où $R^9$ est un groupe alkyle en $C_1$-$C_{10}$, un groupe aryle en $C_6$-$C_{10}$ ou, dans le cas des radicaux contenant Si ou P, aussi un atome d'halogène,
ou chaque fois deux radicaux voisins $R^3$ ou $R^4$, avec l'atome de carbone qui les relie, forment un cycle,

$R^5$, $R^6$ et $R^7$ représentent un atome d'hydrogène et $R^8$ est un groupe phényle, benzyle, méthyle, éthyle, trifluorométhyle ou méthoxy, ou

$R^5$ et $R^7$ sont un atome d'hydrogène et $R^6$ et $R^8$ sont un groupe phényle, benzyle, éthyle, méthyle, trifluorométhyle ou méthoxy.

**2.** Composé métallocène de formule (I)

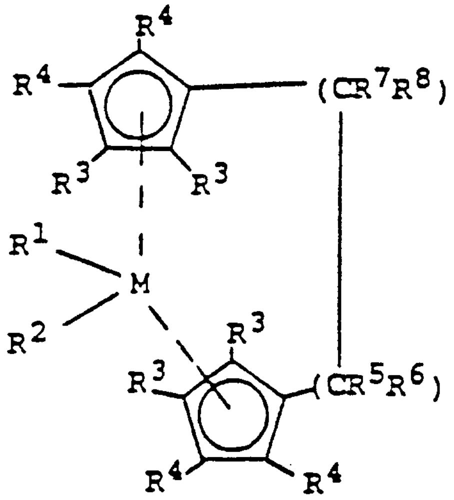

(I)

dans laquelle

M est le zirconium ou l'hafnium,

$R^1$ et $R^2$ sont identiques ou différents et signifient un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$, ou un atome d'halogène.

$R^3$ et $R^4$ sont identiques ou différents et représentent un atome d'hydrogène, un atome d'halogène, un groupe alkyle en $C_1$-$C_{10}$, un radical $-NR^9_2$ -, $-SR^9$-, $-OR^9$-, $-OSiR^9_3$ -, $-SiR^9_3$ - ou $-PR^9_2$ -,

dans lesquels $R^9$ est un groupe alkyle en $C_1$-$C_{10}$, un groupe aryle en $C_6$-$C_{10}$ ou, dans le cas de radicaux contenant du Si ou P, aussi un atome d'halogène,

ou chaque fois deux radicaux voisins $R^3$ ou $R^4$, avec l'atome de carbone qui les relie, forment un cycle.

$R^5$, $R^6$ et $R^7$ représentent un atome d'hydrogène, et $R^8$ est un groupe phényle, benzyle, méthyle, éthyle, trifluorométhyle ou méthoxy ou $R^5$ et $R^7$ représentent un atome d'hydrogène et $R^6$ et $R^8$ sont un groupe phényle, benzyle, éthyle, méthyle, trifluorométhyle ou méthoxy.